Europäisches Patentamt

European Patent Office

Office européen des brevets

(19)

(11) Numéro de publication: **0 074 319**
**B1**

(12) **FASCICULE DE BREVET EUROPEEN**

(45) Date de publication du fascicule du brevet:
03.07.85

(51) Int. Cl.⁴: **H 04 M 1/02,** H 01 H 13/70

(21) Numéro de dépôt: 82401790.9

(22) Date de dépôt: 30.09.82

(54) **Poste téléphonique.**

(30) Priorité: 14.10.81 FR 8119305
01.09.82 FR 8214950

(43) Date de publication de la demande:
16.03.83 Bulletin 83/11

(45) Mention de la délivrance du brevet:
03.07.85 Bulletin 85/27

(84) Etats contractants désignés:
AT BE CH DE GB IT LI LU NL SE

(56) Documents cités:
DE - A - 2 508 102
US - A - 3 591 749
US - A - 3 849 608
US - A - 3 898 394
US - A - 4 317 011

(73) Titulaire: **IN ELECTRONIC, S.A.R.L., 10, rue Médéric,
F-75017 Paris (FR)**

(72) Inventeur: **Sherman, Henry, 115 East Street, New York,
N.Y. 10017 (US)**

(74) Mandataire: **Rodhain, Claude, Cabinet Claude
RODHAIN 30, rue La Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les postes téléphoniques et se rapporte plus particulièrement à un poste téléphonique compact.

En raison des possibilités qu'offre la miniaturisation des circuits, on a tendance actuellement à réaliser des postes téléphoniques de plus en plus compacts.

C'est ainsi qu'on connaît déjà un certain nombre de postes téléphoniques compacts dont l'ensemble des circuits et éléments nécessaires à assurer une liaison téléphonique se trouve dans un boîtier unique et qui joue dorénavant à la fois le rôle de combiné et celui de socle sur lequel le combiné est habituellement posé lorsque le téléphone n'est pas utilisé. Cependant, lorsque le poste téléphonique doit être utilisé avec des dispositifs annexes tels qu'un répondeur automatique, un dispositif d'attente musicale, un dispositif de mémorisation et de recherche automatique de numéros de correspondants privilégiés, le poste téléphonique doit être connecté en permanence à ces dispositifs annexes, ce qui rend de telles installations relativement complexes et encombrantes.

L'invention vise à remédier aux inconvénients précités en créant un poste téléphonique qui tout en étant d'une réalisation simple et légère soit utilisable seul ou en combinaison avec des dispositifs annexes, tout en garantissant à l'utilisateur un maximum de liberté de mouvement en tenant compte du fait qu'il est relié par un câble au réseau téléphonique.

Elle a donc pour objet un poste téléphonique comprenant un boîtier contenant au moins un microphone et un haut-parleur et portant un interrupteur de mise en circuit et hors circuit dudit poste, caractérisé en ce que ledit boîtier présente dans l'une de ses faces, une fente en regard de laquelle est logé un connecteur multiple dont les contacts sont connectés électriquement à certains au moins des composants se trouvant dans ledit boîtier, ledit connecteur multiple assurant la liaison normale entre lesdits composants lorsque le poste est utilisé seul et coopérant avec un connecteur multiple complémentaire enfichable, situé dans un module (15) contenant un logement (16) pour ledit boîtier et relié à des circuits annexes contenus dans ledit module et insérables dans le circuit contenu dans le boîtier par enfichage du connecteur multiple dudit poste avec ledit connecteur complémentaire.

D'autres caractéristiques de l'invention apparaîtront au cours de la description qui va suivre, donnée uniquement à titre d'exemple et faite en référence aux dessins annexés, sur lesquels:

la fig. 1 est une vue en perspective d'un poste téléphonique suivant l'invention associé à un module contenant des dispositifs auxiliaires, tels qu'un répondeur téléphonique ou autre;

la fig. 2 est une vue en plan de l'extérieur du demi-boîtier supérieur du poste de la fig. 1;

la fig. 3 est une vue en plan de l'extérieur du demi-boîtier inférieur du poste de la fig. 1;

la fig. 4 est un schéma synoptique du circuit contenu dans un mode de réalisation du poste téléphonique de la fig. 1;

les fig. 5 à 7 sont des schémas synoptiques montrant des exemples de connexions de dispositifs annexes au poste téléphonique de l'invention par enfichage de celui-ci sur le module auquel il est associé à la fig. 1;

la fig. 8 est une vue en coupe partielle d'un poste téléphonique suivant l'invention associé à un module comportant des moyens de liaison acoustique avec ledit poste;

la fig. 9 est une vue en coupe partielle du poste téléphonique suivant l'invention dans lequel est enfichée une plaquette de circuit intégré portant un circuit complémentaire;

la fig. 10 est une vue générale en perspective d'un combiné téléphonique comportant un autre mode de réalisation du cadran de numérotation ou clavier;

la fig. 11 est une vue éclatée du clavier de la fig. 10;

la fig. 12 est une coupe suivant la ligne III-III du clavier de la fig. 10;

les fig. 13 et 14 sont des vues de détail de la fig. 12 représentant l'arête périphérique avant et après soudure par ultrasons;

la fig. 15 est une vue partielle de dessus du film souple thermoformé, et

la fig. 16 est une coupe selon la ligne VII-VII de la fig. 15.

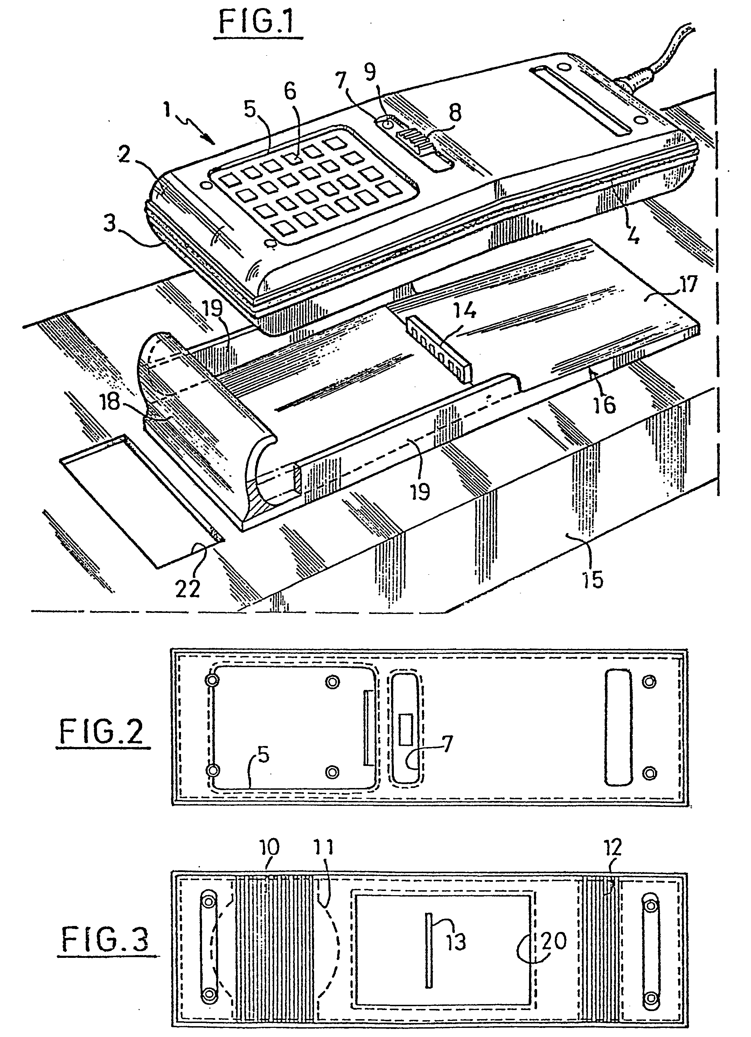

Le poste téléphonique représenté à la fig. 1 comporte essentiellement un boîtier 1 en forme de V renversé très évasé, formé d'un demi-boîtier supérieur 2 et d'un demi-boîtier inférieur 3 assemblés par des vis et entre lesquels est interposé un joint 4 assurant à la fois l'étanchéité du boîtier et la protection de celui-ci contre les chocs latéraux.

La face supérieure du demi-boîtier supérieur 2 comporte une fenêtre 5 de forme rectangulaire par laquelle apparaît un cadran numérique ou clavier 6 de composition de numéros d'appel. Dans le mode de réalisation représenté, ce cadran est de type sensitif.

A proximité de la fenêtre 5 et du même côté que celle-ci, le demi-boîtier 2 présente en outre une lumière 7 pour un commutateur 8 à curseur d'établissement et de coupure de la ligne téléphonique. A ce commutateur 6 est associé un voyant 9 de contrôle de l'état de la ligne.

On remarque que l'ensemble des équipements se trouvant sur la face supérieure du demi-boîtier supérieur 2 est regroupé dans une des branches du V, l'autre branche servant à la prise en main du poste téléphonique. De façon avantageuse, le cadran et le commutateur de ligne sont disposés dans la partie du demi-boîtier la plus éloignée de l'utilisateur, alors que la zone de prise en main se trouve dans la partie la plus proche.

Comme on peut le voir sur la fig. 3, la face inférieure du demi-boîtier inférieur 3 présente une première grille 10 ménagée en regard de l'emplacement du microphone 11 du poste, et, à l'extrémité opposée du boîtier, une seconde grille 12 prévue en regard du haut-parleur. Dans la partie centrale de la face inférieure représentée à la fig. 3 est ménagée une fente transversale 13 destinée à recevoir la fiche mâle 14 d'un connecteur à broches multiples destinés à coopérer avec une prise femelle correspondante logée à l'intérieur du boîtier derrière la fente 13.

Avantageusement, on peut prévoir un support mural présentant un élément en forme de saillie dont la forme correspond à celle de la fente 13; la fixation de l'appareil sur son support se fait alors en engageant ledit élément en saillie dans la fente 13 de manière à accrocher le combiné sur ce support.

Dans le mode de réalisation représenté à la fig. 1, le poste téléphonique suivant l'invention est associé avec un module 15 contenant un certain nombre d'équipements annexes dont on décrira des exemples par la suite et présentant sur sa face supérieure un logement 16 dans lequel le poste est destiné à être engagé.

Ce logement 16 comporte un fond 17 en forme de V évasé complémentaire à celle du boîtier 1, la fiche mâle 14 du connecteur étant disposée au sommet dudit fond. Le logement 16 étant en outre constitué par un rebord d'extrémité 18 de forme arrondie correspondant à la forme arrondie de l'extrémité du boîtier 1 et destiné à assurer le guidage de celui-ci lors de sa mise en place dans le logement ainsi que le positionnement de la fente 13 du boîtier par rapport à la fiche mâle 14 du module 15. Le logement 16 est enfin complété par deux rebords latéraux 19 qui assurent le guidage latéral du boîtier et contribuent à son centrage par rapport à la fiche mâle 14.

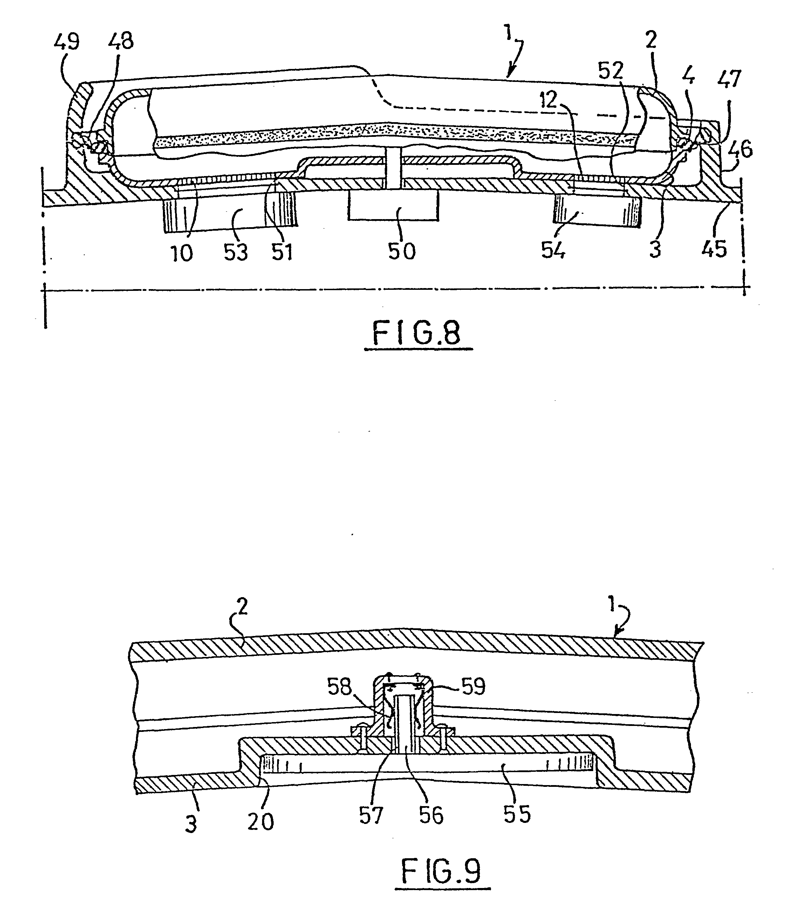

On voit donc que grâce à l'agencement représenté à la fig. 1, le poste peut être remis en place par un seul geste précis par lequel la fiche mâle 14 est disposée immédiatement en regard de la fente 13 du boîtier. En revenant à nouveau à la fig. 3, on constate qu'autour de la fente 13 est ménagé un évidement plat 20 pouvant recevoir une carte de circuit intégré pourvu d'un connecteur mâle pouvant coopérer avec la prise femelle se trouvant à l'intérieur du boîtier et constitué par exemple par un amplificateur d'appoint pour malentendants, une mémoire contenant des numéros d'appel de correspondants privilégiés ou encore une mémoire contenant un code autorisant l'emploi du poste téléphonique (fig. 9).

Ainsi qu'on le décrira par la suite, le poste téléphonique suivant l'invention comporte selon son mode de réalisation préféré, l'ensemble de circuits nécessaire à son fonctionnement. Il constitue donc un poste indépendant, utilisable sans aucun support annexe. Tel est le cas du poste représenté à la fig. 1. Cependant, étant donné que ce poste peut être utilisé avec des équipements auxiliaires tels qu'un répondeur automatique, un dispositif d'attente musicale, une mémoire de numéros d'appel, ou autres, ces équipements auxiliaires sont groupés dans le module 15 et peuvent être connectés dès la mise en place du boîtier 1 dans son logement 16 par engagement de la fiche mâle 14 à laquelle ces équipements sont connectés, dans la fente 13 du poste 1.

Dans le mode de réalisation représenté, le poste téléphonique comporte le cadran de composition ou clavier ce qui le rend autonome.

Il est toutefois possible, pour alléger le poste téléphonique, de transférer le cadran de composition dans le module 15.

Il est également possible d'utiliser un tel poste sans cadran du tout, auquel cas il n'est autonome que pour la réception des appels.

Lorsque le poste téléphonique est utilisé avec un circuit intégré enfiché dans le logement 20 du demi-boîtier inférieur, il constitue un téléphone de table à lui tout seul, sans adjonction d'aucun module complémentaire. Selon une caractéristique particulière de l'invention, le poste téléphonique présente sur sa face supérieure, le cadran et le commutateur de ligne, tandis que sur sa face inférieure opposée, sont prévus le microphone et le haut-parleur. Un tel agencement rend ce poste d'une utilisation particulièrement pratique et permet notamment de l'utiliser en position enfichée sur son module en ayant accès au cadran de composition 6 et au commutateur de ligne 8.

Dans cette position enfichée, le cadran 6, moyennant l'adjonction d'un certain nombre de touches, peut constituer le clavier d'une machine calculatrice qui serait logée dans le module 15. Celui-ci comporte à cet effet, une fenêtre 22 d'affichage associée au circuit de la calculatrice.

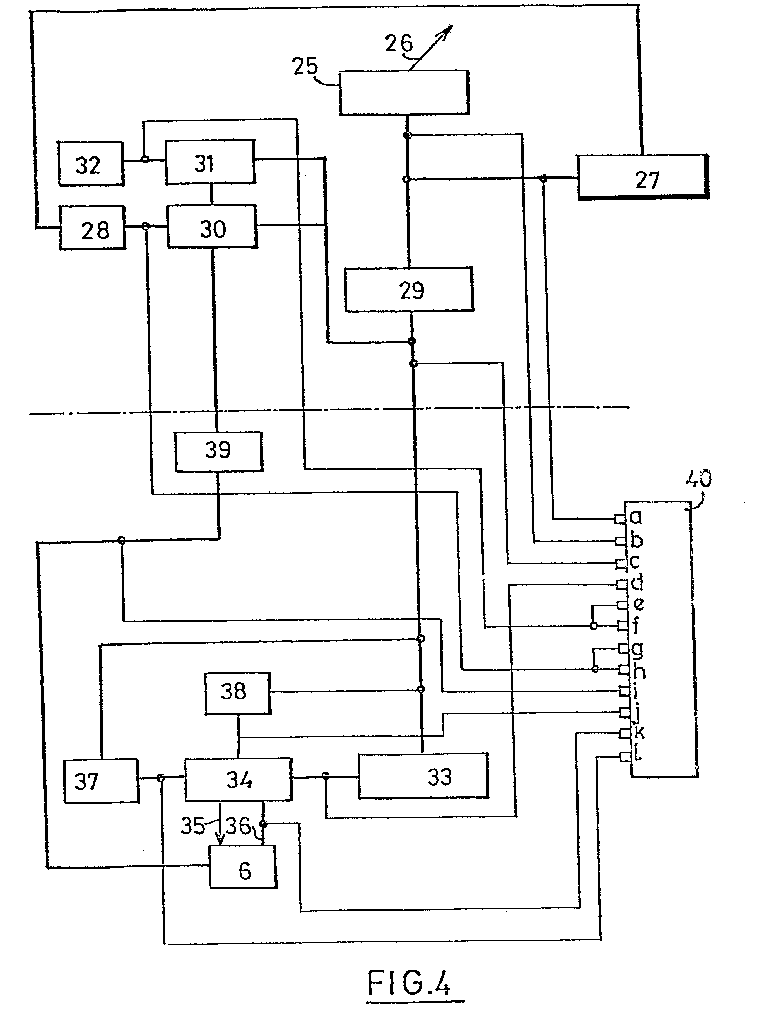

Le joint 4 disposé entre les demi-boîtiers 2, 3, protège le boîtier 1 contre les chocs, mais il constitue également un élément d'étanchéité acoustique qui permet d'utiliser le poste téléphonique de l'invention avec des moyens d'émission et de réception acoustiques prévus dans le logement du module représenté à la fig. 8. Le circuit contenu dans le boîtier du poste téléphonique suivant l'invention est représenté sous la forme du schéma synoptique de la fig. 4.

Ce schéma comporte principalement une prise de ligne 25 connectée au conducteur 26 de liaison du poste avec le réseau. La prise de ligne 25 est par ailleurs reliée à un circuit de sonnerie 27, qui, suivant le mode de réalisation particulier de l'invention, attaque le haut-parleur 28 d'écoute du poste ainsi qu'à un redresseur de ligne 29. Celui-ci est connecté à son tour à un circuit 30 d'adaptation entre la ligne et le haut-parleur 28 et à un amplificateur 31 d'adaptation entre la ligne et le microphone 32 du poste. Le redresseur de ligne 29 est connecté à un circuit 33 de détection de l'état en service ou hors service du poste. Le circuit 33 est connecté à un circuit de gestion 34 qui est connecté à son tour au clavier ou cadran 6 par une première ligne 35 d'émission d'instructions vers ledit cadran, et par une seconde ligne 36 de réception de données de celui-ci. Le circuit de gestion 34 est en outre connecté à un circuit 37 de commutation de lignes pour la numérotation, relié au redresseur de ligne 29 et à un circuit d'alimentation et oscillateur 38. Le clavier ou cadran 6 est connecté à un circuit 39 d'atténuation de signal de fréquence audio qui est lui-même connecté au circuit 30 d'adaptation entre la ligne et le haut-parleur 28. Le circuit 30 est en outre relié à l'amplificateur 31.

Le trait mixte porté sur la fig. 4 indique la séparation entre les circuits contenus dans le boîtier 1 et ceux contenus dans un support éventuel de celui-ci dans le cas où on souhaite réaliser une version simplifiée du poste téléphonique suivant l'invention. On constate qu'alors, seuls les circuits associés à la sonnerie, au microphone et au haut-parleur, sont contenus dans le poste proprement dit, le reste des circuits se trouvant dans son support si on souhaite l'utiliser avec un clavier.

Le circuit représenté sur la fig. 4 comporte également une prise multipolaire 40 destinée à être logée dans le boîtier 1, en regard de la fente 13 et avec laquelle doit coopérer la fiche mâle 14 du module 15. A chaque contact de la fiche 40 est connecté un ou plusieurs conducteurs provenant d'un point de jonction entre deux circuits constituant le circuit du poste de la fig. 4 dont on peut modifier le fonctionnement, soit par coupure de leur connexion, soit par insertion entre eux d'un équipement auxiliaire.

Dans le présent mode de réalisation, la prise 40 doit comporter douze contacts ou groupes de contacts qui sont reliés respectivement à douze points remarquables du circuit. Les contacts de la prise 40 sont référencés par les lettres a à l.

Pour plus de clarté, les connexions des circuits entre eux sont représentées en traits relativement épais, alors que les connexions des points de jonction entre ces circuits et les contacts de la prise 40 sont représentées en traits plus fins. Les liaisons des circuits entre eux d'une part et des circuits avec la prise d'autre part, ont été représentées par des lignes à un seul conducteur. On comprendra toutefois que lorsque c'est nécessaire, les liaisons sont assurées par des lignes à conducteurs multiples.

Grâce au fait que tous les points du circuit du poste téléphonique suivant l'invention permettant l'insertion d'un dispositif annexe sont connectés à la prise 40, pratiquement tous les circuits desservis par ces points peuvent être associés à des circuits extérieurs contenus par exemple dans le module 15 de la fig. 1 par simple enfichage de la fiche mâle 14 dans la prise 40. Inversement, les liaisons ainsi établies peuvent être interrompues instantanément lors de la prise en main du poste et désolidarisation de la prise 40 et de la fiche 14. Il est donc possible d'employer les éléments constituant le circuit du poste téléphonique dans des montages qui nécessitaient jusqu'à présent l'adjonction d'éléments équivalents qui leur étaient propres. Il en résulte par conséquent, une économie importante pour la réalisation des équipements annexes au poste téléphonique.

Dans le mode de réalisation représenté à la fig. 4, les contacts a et l de la prise 40 sont respectivement connectés aux points de jonction des circuits dont la liste suit:

a: circuit de sonnerie 27
b: prise de ligne 25
c: redresseur de ligne — circuit de détection 33
d: circuit de gestion 34 — circuit de détection 33
e et f: amplificateur 31 — microphone 32
g et h: circuit d'adaptation 30 — haut-parleur 28
i: atténuateur 39 — clavier 6

j: circuit de gestion 34 — alimentation 38
k: clavier 6 — circuit de gestion 34
l: circuit de gestion 34 — circuit de commutation 37

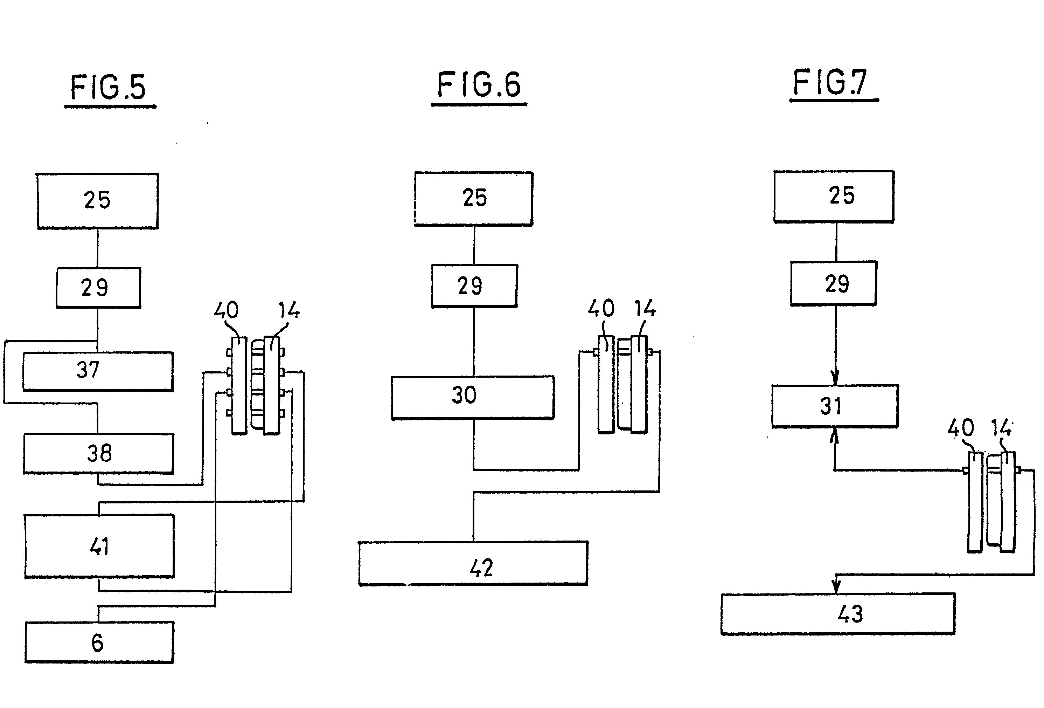

Le schéma synoptique de la fig. 5 montre un exemple de l'insertion dans le circuit de la fig. 4 d'une mémoire contenant des numéros d'abonnés privilégiés. La prise de ligne 25 est connectée de façon permanente au circuit de commutation 37 par l'intermédiaire du redresseur de ligne 29. Mais le circuit 37 au lieu d'être connecté au circuit de gestion 34 de la fig. 4 est relié par l'intermédiaire du circuit d'alimentation et oscillateur 38 à une mémoire 41, la connexion entre ces deux derniers circuits étant assurée par des contacts de la prise 40 et de la fiche 14 du module 15. La mémoire 41 est par ailleurs connectée au clavier 6 également par l'intermédiaire de la prise 40 et de la fiche 14. On voit donc que la mémoire 41 est ici substituée au circuit de gestion 34.

Le circuit représenté à la fig. 6 représente la connexion par enfichage du poste téléphonique à un magnétophone d'enregistrement. La prise de ligne 25 est ici connectée normalement au circuit 30 d'adaptation du haut-parleur 28 à la ligne, par l'intermédiaire du redresseur de ligne 29, mais ce circuit est en outre connecté à un magnétophone d'enregistrement 42 par insertion de celui-ci dans son circuit lors de l'introduction de la fiche mâle dans la prise 40.

Le circuit représenté à la fig. 7 illustre l'insertion dans le circuit d'une source sonore qui peut être comme la mémoire de la fig. 5, et le magnétophone d'enregistrement de la fig. 6, contenue dans le module 15 associé au poste de la fig. 1. Dans ce montage, la prise de ligne 25 est connectée à l'amplificateur 31 d'adaptation du microphone 32 à la ligne par l'intermédiaire du redresseur de ligne 29, et l'amplificateur 31 est connecté à une source sonore 43, l'insertion de la source sonore destinée à assurer la fonction d'attente musicale étant réalisée par l'introduction de la fiche 14 dans la prise 40.

Le circuit représenté à la fig. 4 permet d'utiliser le haut-parleur 28 non seulement pour transmettre les conversations du correspondant, mais également pour émettre les signaux de sonnerie. Il suffit à cet effet que le point de jonction entre le circuit d'adaptation 30 et le haut-parleur 28 soit interrompu par introduction de la fiche 14 dans la prise 40 et que soit alors établie la liaison entre le circuit de sonnerie 27 et le haut-parleur. Ce dernier est donc ainsi utilisé comme interface sonore de sonnerie et il est utilisé comme interface audio lors du décrochement du poste. Le voyant 9 représenté sur la fig. 1 qui est placé de façon à être masqué par le curseur du commutateur 8 lorsque celui-ci se trouve en position fermée, est utilisé en témoin de numérotation lors de la manipulation des touches du clavier sensitif 6. Il est connecté à cet effet de manière à clignoter au rythme des impulsions envoyées sur la ligne par ledit clavier. Le circuit téléphonique interne au boîtier 1 peut en outre comporter des moyens de mise en mémoire du dernier numéro composé et une touche de silence qui a pour but de mettre le microphone 32 hors service.

Grâce à l'agencement qui vient d'être décrit, un certain nombre de circuits qui constituent le schéma de la fig. 4 peuvent servir à de multiples applications, soit dans le poste téléphonique lui-même, soit associés à des modules externes. C'est ainsi que dans le logement 20 de la face inférieure du poste 1, on peut insérer un amplificateur pour malentendants, une mémoire de numérotation ou bien tout élément péritéléphonique complémentaire de faible dimension. Ainsi qu'on l'a déjà indiqué plus haut, l'ensemble prise 40 et fiche 14 constitue un connecteur pouvant être utilisé en tant que serrure électronique codée et par conséquent réserver à l'utilisateur les fonctions de son choix, par exemple accès aux communications en province, accès aux communications vers l'étranger, accès au clavier ou encore accès à certaines applications particulières du poste.

Dans le cadre des applications de la transmission de l'information entre le poste téléphonique d'une part et le module d'autre part, au moyen de signaux d'audio-fréquence, la présence du joint torique 4, grâce à l'étanchéité qu'il procure entre le poste téléphonique et son support lorsque le poste est mis en place, permet une transmission parfaite des sons entre le haut-parleur et le microphone du poste téléphonique et des éléments éventuels complémentaires qui seraient prévus dans son support. Il est ainsi possible de réaliser par exemple un répondeur qui se déclencherait à la réception des sons émis par la sonnerie et qui émettrait par le microphone 32 du circuit de la fig. 4, la réception de la réponse étant assurée par l'intermédiaire du haut-parleur 28 et cela sans aucune liaison électrique entre ces composants du poste téléphonique et les moyens prévus dans le module associé, mis à part toutefois la prise de ligne ordinaire du poste téléphonique.

L'ensemble représenté à la fig. 8 comporte un poste téléphonique analogue à celui de la fig. 1, mais le module auquel il est associé présente la particularité de comporter des moyens de liaison acoustique avec le poste.

Le module 45 présente à cet effet un logement 46 pour le boîtier, qui comporte un rebord continu 47 entourant complètement le boîtier et portant un joint d'étanchéité 48 en forme de lèvre, tourné vers l'intérieur. Le joint torique 4 pris entre les demi-boîtiers 2 et 3 du boîtier 1 prend appui sur le joint 48 pour assurer une isolation acoustique entre l'intérieur et l'extérieur du logement 46.

Le rebord périphérique 47 comporte une portion d'extrémité 49 de forme arrondie et surélevée pour favoriser le guidage et la mise en place du boîtier 1.

Dans le fond du logement 46 du module 45 sont ménagés, outre le passage pour le connecteur mâle 50, deux orifices 51, 52 disposés respectivement en regard des grilles 10 et 12 pour le microphone et pour le haut-parleur du poste et destinés à permettre la liaison acoustique entre un haut-parleur 53 d'un répondeur automatique et d'un microphone 54 d'un dispositif d'enregistrement (non représentés) contenus dans le module 45.

La coopération des joints 4 et 48 évite les pertes acoustiques vers l'extérieur, ce qui améliore la liaison acoustique ainsi établie.

Bien entendu, cette liaison acoustique entre le poste et le module s'accompagne d'une liaison électrique par un connecteur multiple analogue à celui représenté et décrit précédemment, et dont la fiche mâle 50 est représentée à la fig. 8.

La fig. 9 illustre la manière dont un circuit modulaire 55 constitué par exemple par un amplificateur pour malentendants réalisé sous la forme d'une plaquette de circuit intégré munie d'une fiche mâle 56, est placé dans le logement 20 du poste téléphonique.

Cet amplificateur 55 devant être inséré entre le circuit d'adaptation 30 et le haut-parleur 28 du circuit de la fig. 4, les contacts 57 du connecteur mâle 56 coopèrent avec des contacts 58 correspondants d'un connecteur femelle 59 placé dans le poste 1, reliés de façon appropriée aux éléments 30 et 28 précités, de sorte que l'enfichage du circuit 55 provoque son insertion à l'emplacement souhaité du circuit du poste téléphonique.

Dans les divers modes de réalisation décrits et représentés, les connecteurs femelles sont portés par le poste téléphonique alors que les connecteurs mâles se trouvent dans les modules auxquels il est associé. On comprendra toutefois que la disposition inverse peut être également adoptée.

Dans le mode de réalisation représenté à la fig. 8, le poste téléphonique est associé à un module comportant un répondeur et un dispositif d'enregistrement 8.

Cependant, le module précité peut être un module d'informatique à condition que celui-ci soit équipé d'un logement pour le poste analogue à celui décrit.

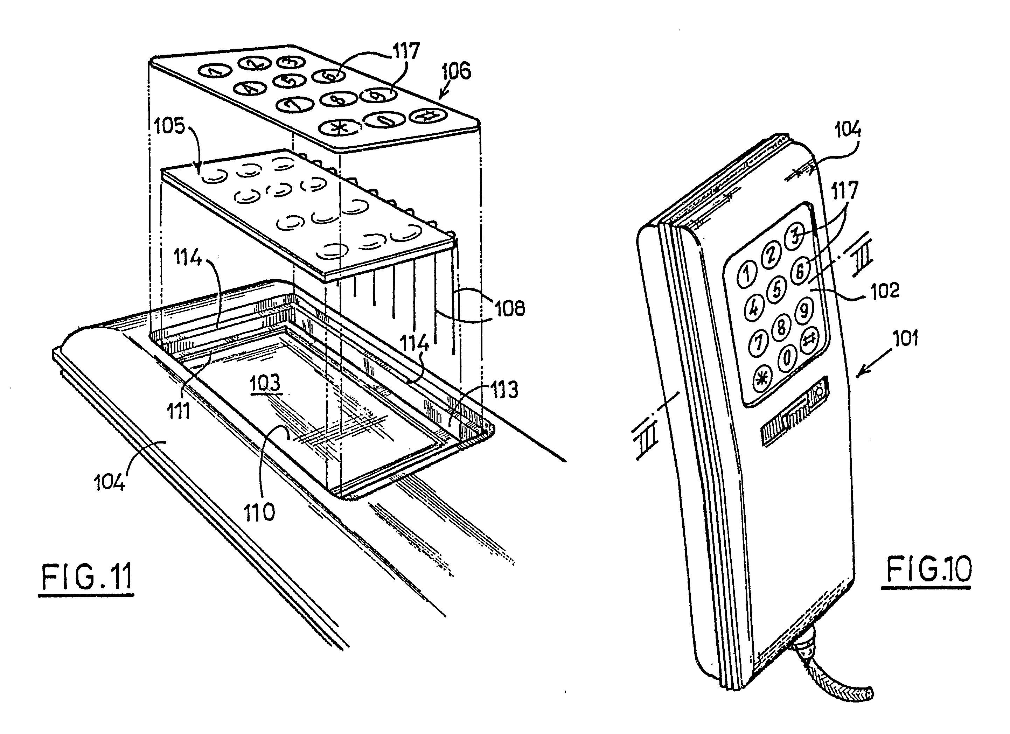

On voit à la fig. 10 un combiné téléphonique 101 comportant un clavier 102 conforme à la présente invention. Comme on peut le voir à la fig. 11, ce clavier est disposé dans un logement 103 aménagé dans le boîtier 104 du combiné téléphonique 101.

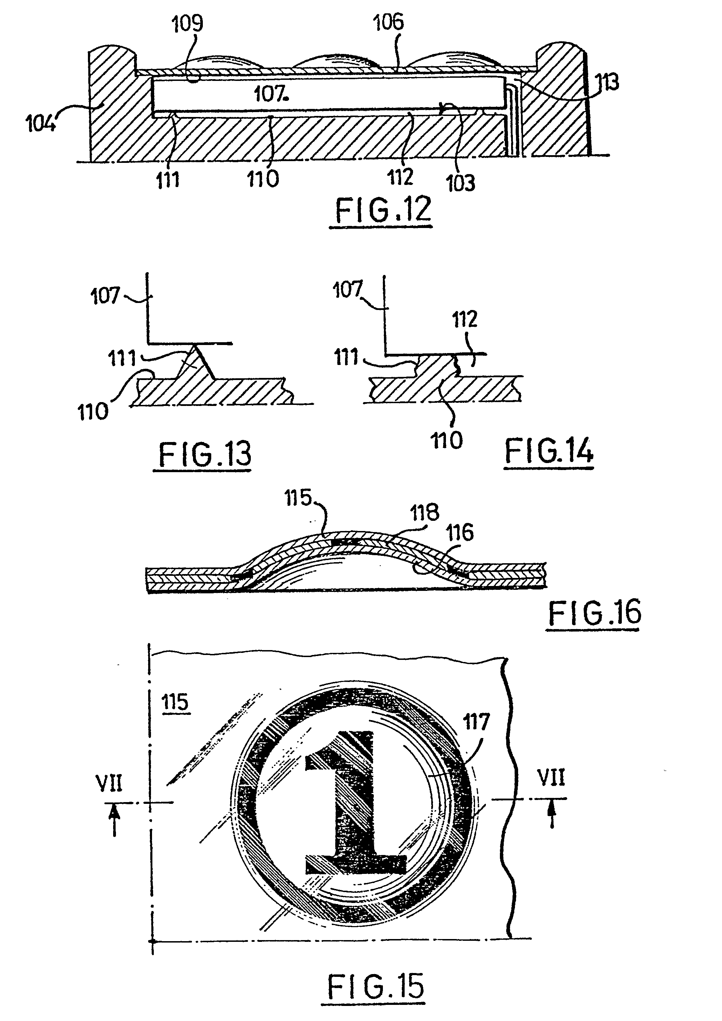

Comme on peut le voir en particulier sur les fig. 11 et 12, le clavier selon l'invention comporte un ensemble de contacts 105 qui est recouvert d'un film souple 106. L'ensemble de contacts 105, un composant connu, comporte essentiellement un support rigide 107 dans lequel sont noyés les fils de connexion dont les extrémités 108 sortent du support 107 sur le côté de ce dernier et une feuille souple 109 sur laquelle sont fixées les coupelles métalliques et leurs connexions. L'ensemble des contacts à coupelles 105 se présente donc sous la forme d'un élément plat de faible épaisseur comportant des renflements sur sa face supérieure au regard des contacts à coupelles.

Conformément à l'invention, le fond 110 du logement 103 présente une arête fermée périphérique 111 qui fait saillie vers le haut et qui est disposée le long des parois latérales dudit logement. Le support rigide 107 de l'ensemble de contacts 105 est solidarisé de manière étanche avec cette arête 111, de manière à réaliser une zone lamellaire 112 entièrement fermée et qui constitue une caisse de résonance. La fixation du support rigide 107 sur l'arête périphérique 111 est réalisée au moyen d'une soudure par ultrasons. A cet effet, les dimensions du logement 103 sont légèrement supérieures à celles du support rigide 107 de manière à ménager un certain jeu entre celui-ci et les parois latérales du logement 103, ce jeu étant nécessaire pour permettre au support 107 de vibrer pendant l'opération de soudage par ultrasons. Les fig. 13 et 14 représentent l'arête périphérique 111 avant et après l'opération de soudure par ultrasons; on voit qu'au cours de cette opération, l'arête 111 s'écrase et se solidarise du support 107. Pour être sûr de l'étanchéité de la zone lamellaire 112, il est préférable de réaliser une opération de soudure par ultrasons telle que l'arête 111 soit substantiellement noyée dans le support 107 lors de cette opération; ainsi, on peut faire une opération de soudure par ultrasons dans laquelle l'arête est réduite des trois quarts. Selon un mode de réalisation de l'invention, l'arête a une hauteur initiale de 0,4 mm et elle est réduite de 0,3 mm, de manière à aménager une zone lamellaire 112 dont la hauteur moyenne est de 0,1 mm. Pour que l'opération de soudure par ultrasons soit réalisée dans de bonnes conditions, il est nécessaire que la matière constituant le logement 103 et celle constituant le support rigide 107, soient de consistances voisines.

Le fond 110 du logement 103 comporte également une ouverture latérale allongée 113 ménagée entre une de ces parois et l'arête périphérique 111 et destinée au passage des extrémités 108 des fils de connexion de l'ensemble de contacts 105.

Selon une caractéristique importante de l'invention, après la fixation dans le logement 103, l'ensemble de contacts 105 est recouvert d'un film souple thermoformé 106 qui épouse parfaitement la feuille souple supportant les coupelles métalliques de contact, adhérant parfaitement à cette dernière, et dont les bords sont fixés sur un épaulement 114 ménagé dans les parois latérales du logement 103. Cet épaulement est aménagé de telle manière qu'il soit exactement de niveau avec la face supérieure du support rigide 107. De cette manière, on réalise d'une part une fermeture étanche du logement 103, ce qui est important pour la protection des circuits disposés à l'intérieur du boîtier; d'autre part, ce film souple thermoformé 106 renforce la feuille souple, support des lamelles 109, et s'oppose à tout décollement de cette dernière sur ses bords, puisque le film adhère parfaitement et de manière solide sur les épaulements 114.

La fixation du film souple thermoformé 106 sur la feuille souple 109, support des contacts, doit être réalisée de manière parfaite, afin d'éviter toute inclusion d'air entre ces deux éléments, car une telle inclusion d'air risque d'entraîner une rupture du film 106 au bout d'un nombre important de manœuvres. De manière avantageuse, la fixation du film souple thermoformé 106 sur la feuille support des coupelles 109 et sur les épaulements 114 est réalisée par soudure par ultrasons.

Les fig. 15 et 16 représentent la structure d'un mode préféré de réalisation du film souple thermoformé 106. Il est essentiellement constitué d'une première couche supérieure 115 de faible épaisseur en matière transparente, et d'une deuxième couche de protection 115. Les repères 117 des différentes touches sont obtenus par impression sur la face inférieure de la couche 115, c'est-à-dire la face venant en contact avec la couche 116, cette impression est faite en négatif. On imprime tout d'abord les inscriptions et les décors, à savoir les chiffres et les cercles les entourant dans l'exemple représenté; on procède ensuite à une deuxième impression d'un fond coloré de couleur différente, toujours sur la face inférieure de la couche 115. On assemble ensuite les deux couches 115 et 116.

L'assemblage des couches 115 et 116 se fait de préférence avec interposition d'une couche de matière adhésive 118.

Lorsque les deux couches 115 et 116 sont assemblées, on procède à une opération de thermoformage de manière à réaliser des bossages au niveau des contacts de l'ensemble de contacts 105, comme représenté à la fig. 16.

Le fait de réaliser les repères du clavier par impression en négatif sur la face inférieure de la couche 115 permet d'obtenir des inscriptions durables puisque l'encre d'impression des repères et du fond n'est pas en contact avec les doigts et protégé par la couche de protection 116. Cette solution offre de bien meilleurs résultats, en particulier, que l'utilisation de techniques sérigraphiques pour obtenir les inscriptions sur le film souple 106.

La composition et l'épaisseur des différentes couches 115, 116 et 118 sont choisies de manière à obtenir un film de faible épaisseur, présentant une élasticité suffisante pour l'actionnement des contacts à coupelles, le rapport des épaisseurs des couches 115 et 116 est par exemple égal à 3. Selon un mode de réalisation de l'invention, la couche supérieure 115 est constituée par un polycarbonate de 125 microns d'épaisseur et la couche de protection 116 est constituée par une matière adhésive double face telle qu'une colle acrylique, dont l'épaisseur est de 0,3 mm et dont la tenue en température est de −20 à −120°C en continu et à +150° en continu. L'utilisation de polycarbonate permet d'avoir un film 106 de contact agréable au toucher.

On voit que l'invention permet de réaliser un clavier de faible épaisseur, quelques millimètres par exemple qui allie les avantages des claviers mécaniques et les avantages des claviers sensitifs. En effet, les utilisateurs peuvent retrouver les sensations et les bruits auxquels ils sont habitués avec les claviers mécaniques classiques, mais l'encombrement et l'aspect esthétique du clavier selon l'invention font penser à un clavier du type sensitif.

Par ailleurs, grâce à l'invention, on peut éliminer les risques de fatigue des claviers à coupelles métalliques actuels.

Le poste téléphonique qui vient d'être décrit et qui peut être dénommé téléphone compact, est extrêmement maniable, car il permet une évolution en toute liberté autour de son point de connexion à la ligne téléphonique. Il permet en outre de disposer de fonctions supplémentaires par le simple fait qu'on le pose sur une embase contenant le ou les modules appropriés. En outre, il constitue un téléphone évolutif car il peut comporter en lui, du fait des connexions prévues à l'avance sur sa prise multipolaire interne, des possibilités d'extension par adjonction d'éléments complémentaires au module externe avec lequel il est destiné à coopérer par enfichage.

## Revendications

1. Poste téléphonique comprenant un boîtier (1) contenant au moins un microphone (32) et un haut-parleur (28) et portant un interrupteur (8) de mise en circuit et hors circuit dudit poste, caractérisé en ce que ledit boîtier (1) présente dans l'une de ses faces, une fente (13) en regard de laquelle est logé un connecteur multiple (40) dont les contacts sont connectés électriquement à certains au moins des composants (25, 27 à 39) se trouvant dans ledit boîtier (1), ledit connecteur multiple (40) assurant la liaison normale entre lesdits composants lorsque le poste est utilisé seul et coopérant avec un connecteur multiple (14) complémentaire, enfichable, situé dans un module (15) contenant un logement (16) pour ledit boîtier et relié à des circuits (41, 42, 43) annexes contenus dans ledit module et insérables dans le circuit contenu dans le boîtier (1) par enfichage du connecteur multiple (40) dudit poste avec ledit connecteur complémentaire (14).

2. Poste téléphonique suivant la revendication 1, caractérisé en ce que ledit boîtier (1) est en forme de V renversé très évasé et présente une face concave, dirigée vers le bas dans la partie centrale de laquelle est ménagée ladite fente (13) à la jonction des branches dudit boîtier (1), en ce que le microphone (32) et le haut-parleur (28) dudit poste sont logés dans ledit boîtier (1) contre la face inférieure de celui-ci en regard des grilles respectives (10, 12) ménagées dans ladite face inférieure de part et d'autre de ladite fente (13), et en ce que ledit interrupteur (8) de mise en circuit et hors circuit dudit poste est disposé dans la face supérieure dudit boîtier (1).

3. Poste téléphonique suivant la revendication 2, comportant en outre un cadran numérique ou clavier de composition de numéros, logé dans ledit boîtier (1), caractérisé en ce que ledit clavier (6) est logé dans une fenêtre (5) ménagée dans la face supérieure dudit boîtier (1) à proximité dudit interrupteur (8) de mise en circuit et hors circuit du poste, ledit clavier (6) et ledit interrupteur (8) étant groupés d'un côté de ladite face supérieure dont l'autre côté sert à la prise en main dudit poste.

4. Poste téléphonique suivant la revendication 1, caractérisé en ce que ledit boîtier comporte deux demi-boîtiers (2, 3) assemblés avec interposition d'un joint (4) d'étanchéité et de protection contre les chocs, et en ce que ledit joint (4) constitue également un joint d'étanchéité acoustique coopérant avec un joint d'étanchéité périphérique (48) monté dans le logement (46) pour ledit boîtier (1) prévu dans ledit module (45), le fond dudit logement comportant des orifices (51, 52) de liaison acoustique dudit module avec le haut-parleur (28) et le microphone (32), contenus dans ledit boîtier, lesdits orifices étant disposés en regard des grilles (10, 12) respectives dudit boîtier (1) contre lesquelles sont montés le haut-parleur (28) et le microphone (32).

5. Poste téléphonique suivant la revendication 1, caractérisé en ce que ledit connecteur complémentaire (14) est constitué par une fiche mâle multipolaire montée dans un module (15) contenant lesdits circuits (41, 42, 43) insérables dans le circuit contenu dans ledit boîtier (1), ledit module comportant un logement (16) comprenant un fond (17), au moins un rebord d'extrémité (18) et au moins un rebord latéral (19) de guidage pour le boîtier (1), le fond (17) dudit logement (16) présentant une forme convexe complémentaire de celle de la face inférieure dudit boîtier (1), la fiche mâle multipolaire (14) étant placée dans la partie saillante dudit fond pour venir en prise avec le connecteur (40) du boîtier (1) par introduction dans la fente (1) du boîtier (1), lors de la mise en place de ce dernier dans ledit logement (16).

6. Poste téléphonique suivant la revendication 1, caractérisé en ce que ledit boîtier (1) comporte dans sa face inférieure, un évidement (20) entourant la fente (13) et destiné à recevoir un module (55) du circuit intégré enfichable contenant au moins un circuit électronique complémentaire.

7. Poste téléphonique suivant la revendication 1, caractérisé en ce qu'il comporte un support mural présentant un élément en saillie s'engageant dans la fente (13) en vue de la fixation dudit poste.

8. Poste téléphonique suivant la revendication 3, caractérisé en ce que le clavier est un clavier à coupelles métalliques, comportant un ensemble de contacts à coupelles métalliques constitué essentiellement d'un support rigide dans lequel sont noyés les fils de connexion et d'une feuille souple portant les coupelles et leurs connexions, l'ensemble de contacts (105) à coupelle métallique étant disposé dans un logement (103) constitué par une cavité dont le fond (110) présente une arête (111) périphérique en saillie continue sur laquelle est soudé, par ultrasons, le support (107) dudit ensemble de contacts (105), de manière à créer, entre ledit support (107) et le fond (110) du logement, une zone lamellaire (112) fermée formant caisse de résonance.

9. Poste selon la revendication 8, caractérisé en ce que le logement précité (103) comporte un épaulement (114) de niveau avec la face supérieure dudit ensemble de contacts (105) et en ce que ledit ensemble de contacts (105) est recouvert d'un film souple thermoformé (106) dont la forme correspond à celle de la feuille support (109) des coupelles, qui est fixée de manière parfaitement étanche sur ladite feuille (109) et dont les bords sont fixés sur l'épaulement (114) précité, la fixation dudit film (106) étant obtenue par soudure par ultrasons.

10. Poste suivant la revendication 9, caractérisé en ce que le film souple thermoformé (106) est constitué d'une première couche de matière transparente (115), sur la face inférieure de laquelle sont imprimés les repères (117) de touche et d'une deuxième couche de protection (116) collée sur la face inférieure de la première couche (115), l'ensemble étant ensuite soumis à un traitement de thermoformage pour obtenir la forme de la feuille support (109) des contacts à coupelle.

11. Poste suivant la revendication 8, caractérisé en ce que les dimensions du logement (103) sont légèrement supérieures aux dimensions extérieures de l'ensemble de contacts (105), de manière à laisser un certain jeu en vue du soudage par ultrasons.

12. Poste suivant la revendication 10, caractérisé en ce qu'une couche de matière adhésive (118) est interposée entre la première couche (115) et la deuxième couche (116) de protection du film souple thermoformé.

13. Poste suivant la revendication 10, caractérisé en ce que la première couche précitée (115) est en polycarbonate.

14. Poste suivant la revendication 13, caractérisé en ce que l'épaisseur de la première couche (115) précitée, est environ trois fois plus faible que celle de la deuxième couche (116) de protection.

**Patentansprüche**

1. Fernsprechapparat mit einem mindestens ein Mikrophon (32) und einen Lautsprecher (28) enthaltenden sowie einen Schalter (8) zum Ein- und Ausschalten des Apparates aufweisenden Gehäuse (1), dadurch gekennzeichnet, dass in der einen Fläche des Gehäuses (1) ein Schlitz (13) vorgesehen ist, dem gegenüber ein mehrpoliger Anschluss (40) angeordnet ist, dessen Kontakte elektrisch mit wenigstens einigen der im Gehäuse (1) vorhandenen Bauteile (25, 27 bis 39) verbunden sind, wobei der mehrpolige Anschluss (40) bei alleiniger Verwendung des Apparates die normale Verbindung zwischen den genannten Bauteilen gewährleistet und mit einem komplementären einsteckbaren, mehrpoligen Anschlussteil (14) zusammenarbeitet, der in einem eine Aufnahme (16) für das Gehäuse aufweisenden Modul (15) vorgesehen und mit in dem Modul vorhandenen Anschluss-Schaltkreisen (41, 42, 43) verbunden ist, die in den im Gehäuse (1) befindlichen Schaltkreis durch Verbinden des mehrpoligen Anschlusses (40) des Apparates mit dem komplementären Anschlussteil (14) einfügbar sind.

2. Fernsprechapparat nach Anspruch 1, dadurch gekennzeichnet, dass das Gehäuse (1) die Form eines umgekehrten, sehr weiten V sowie eine nach unten gerichtete konkave Fläche aufweist, in deren Mittelteil am Zusammenstosspunkt der Arme des Gehäuses (1) der Schlitz (13) vorgesehen ist, dass das Mikrophon (32) und der Lautsprecher (28) des Apparates in dem Gehäuse (1) gegen dessen Unterseite gerichtet vor entsprechenden in der unteren Fläche zu beiden Seiten des Schlitzes (13) vorgesehenen Gittern (10, 12) vorgesehen sind, und dass der Schalter (8) zum Ein- und Ausschalten des Apparates in der oberen Fläche des Gehäuses (1) angeordnet ist.

3. Fernsprechapparat nach Anspruch 2, der ferner eine im Gehäuse (1) angeordnete Wählscheibe oder Wähltastatur aufweist, dadurch gekennzeichnet, dass die Tastatur (6) in einem in der oberen Fläche des Gehäuses (1) in der Nähe des Schalters (8) zum Ein- und Ausschalten des Apparates vorgesehenen Fenster (5) angeordnet ist, wobei die Tastatur (6) und der Schalter (8) auf einer Seite der oberen Fläche vorgesehen sind und die andere Seite dieser oberen Fläche zum Ergreifen des Apparates mit der Hand dient.

4. Fernsprechapparat nach Anspruch 1, dadurch gekennzeichnet, dass das Gehäuse aus zwei unter Zwischenlage einer dichtenden und stossdämpfenden Dichtung (4) zusammengesetzten Halbschalen (2, 3) besteht, dass die Dichtung (4) zugleich eine Schalldämmung bildet, die mit einer in der im Modul (45) vorgesehenen Dichtung (46) für das Gehäuse (1) angebrachten peripheren Schalldämmung (48) zusammenwirkt, wobei im Boden der Aufnahme Öffnungen (51, 52) zur akustischen Verbindung des Moduls mit dem im Gehäuse enthaltenen Lautsprecher (28) und Mikrophon (32) vorgesehen sind, welche Öffnungen gegenüber den entsprechenden Gittern (10, 12) des Gehäuses (1) angeordnet sind, hinter denen der Lautsprecher (28) und das Mikrophon (32) befestigt sind.

5. Fernsprechapparat nach Anspruch 1, dadurch gekennzeichnet, dass das komplementäre Anschlussteil (14) ein mehrpoliger Stecke ist, der in einem Modul (15) angebracht ist, welcher die in den im Gehäuse (1) enthaltenen Schaltkreis einfügbaren Schaltkreise (41, 42, 43) enthält, welcher Modul eine Aufnahme (16) mit einem Boden (17), mindestens einer äusseren Randleiste (18) und wenigstens einer seitlichen Leiste zur Führung des Gehäuses (1) aufweist, wobei der Boden (17) der Aufnahme (16) eine konvexe, zur unteren Fläche des Gehäuses (1) komplementäre Form aufweist und der mehrpolige Stecker (14) in dem hochstehenden Teil des Bodens angeordnet ist, um mit dem Anschluss (40) des Gehäuses (1) durch Einführen in den Schlitz (13) des Gehäuses (1), bei dessen Einsetzen in die Aufnahme (16), in Kontakt zu kommen.

6. Fernsprechapparat nach Anspruch 1, dadurch gekennzeichnet, dass das Gehäuse (1) in seiner unteren Fläche eine den Schlitz (13) umgebende Ausnehmung (20) zur Aufnahme eines einsteckbaren Moduls (55) mit einer integrierten Schaltung, der mindestens einen ergänzenden elektronischen Schaltkreis aufweist.

7. Fernsprechapparat nach Anspruch 1, dadurch gekennzeichnet, dass er eine Mauerhalterung mit einem in den Schlitz (13) einführbaren Vorsprungelement zur Halterung des Apparates aufweist.

8. Fernsprechapparat nach Anspruch 3, dadurch gekennzeichnet, dass die Tastatur eine solche mit metallischen Schalen ist und eine Einheit von metallischen Schalenkontakten aufweist, welche Einheit im wesentlichen aus einem starren Träger, in dem die Verbindungsdrähte eingelassen sind, und aus einer nachgiebigen, die Schalen und ihre Verbindungen tragenden Folie besteht, wobei die Metallschalenkontakteinheit (105) in einer durch eine Ausnehmung gebildeten Lagerung (103) angeordnet ist, deren Boden (110) einen kontinuierlichen, peripheren, vorspringenden Anschlag (111) aufweist, auf den durch Ultraschallschweissender Träger (107) der Kontakteinheit (105) aufgeschweisst ist, wodurch zwischen dem Träger (107) und dem Boden (110) der Lagerung eine geschlossene, als Resonanzkasten wirkende blattförmige Zone (112) gebildet wird.

9. Fernsprechapparat nach Anspruch 8, dadurch gekennzeichnet, dass die Lagerung (103) in der Ebene der Oberseite der Kontakteinheit (105) eine Schulter (114) aufweist, und dass die Kontakteinheit (105) mit einem biegsamen wärmegeformten Film (106) bedeckt ist, dessen Form der der Trägerfolie (109) der Schalen entspricht, wobei der Film völlig dicht auf der Folie (109) befestigt ist und seine Ränder auf der Schulter (114) befestigt sind, wobei die Befestigung des Filmes (106) durch Ultraschallschweissen erhalten ist.

10. Fernsprechapparat nach Anspruch 9, dadurch gekennzeichnet, dass der biegsame wärmegeformte Film (106) aus einer ersten Schicht aus transparentem Material (115), auf deren Unterseite die Berührungsmarken (117) aufgedruckt sind, und aus einer zweiten, auf die Unterseite der ersten Schicht (115) aufgeklebten Schutzschicht (116) besteht, welche Einheit anschliessend einer Thermoformung unterworfen wird, um die Form der Trägefolie (109) für die Schalenkontakte zu erhalten.

11. Fernsprechapparat nach Anspruch 8, dadurch gekennzeichnet, dass die Abmessungen der Lagerung (103) etwas grösser sind, als die Aussenabmessungen der Kontakteinheit (105), um ein gewisses Spiel im Hinblick auf die Ultraschallschweissung zu belassen.

12. Fernsprechapparat nach Anspruch 10, dadurch gekennzeichnet, dass eine Klebstoffschicht (118) zwischen der ersten Schicht (115) und der zweiten, zum Schutz des biegsamen wärmegeformten Films dienenden Schicht (116) vorgesehen ist.

13. Fernsprechapparat nach Anspruch 10, dadurch gekennzeichnet, dass die erste Schicht (115) aus Polykarbonat besteht.

14. Fernsprechapparat nach Anspruch 13, dadurch gekennzeichnet, dass die Dicke der ersten Schicht (115) ungefähr dreimal dünner ist, als die der zweiten Schutzschicht (116).

**Claims**

1. A telephone set comprising a casing (1) containing at least one microphone (32) and a loud-speaker (28) and bearing a switch (8) for connecting and disconnecting the said set, characterized in that in one of its faces the said casing (1) has a slot (13) opposite which there is accommodated a multipole connector (40), the contacts of which are electrically connected to at least some of the components (25, 27 to 39) situated in the said casing (1), the said multipole connector (40) ensuring the normal interconnection of the said components when the set is used alone and cooperating with a further multipole connector (14) which can be plugged in, and which is located in a module (15) comprising a housing (16) for the said casing and is connected to external circuits (41, 42, 43) which are contained in the said module and can be inserted in the circuit contained in the casing (1) by plugging in the multipole connector (40) of the said set with the said further connector (14).

2. A telephone set according to Claim 1, characterized in that the said casing (1) is in the form of an inverse V which is very flared and has a concave, downwardly directed surface, in the central section of which the said slot (13) is provided at the junction of the branches of the said casing (1); in that the microphone (32) and the loud-speaker (28) of the said set are accommodated in the said casing (1) against the lower face thereof opposite respective grilles (10, 12) provided in the said lower face either side of the said slot (13); and in that the said switch (8) for connecting and disconnecting the said set is disposed in the upper face of the said casing (1).

3. A telephone set according to Claim 2, in addition comprising a numerical dial plate or keyboard for composing numbers which is accommodated in the said casing (1), characterized in that the said keyboard (6) is accommodated in a window (5) provided in the upper face of the said casing (1) in the vicinity of the said switch (8) for connecting and disconnecting the set, the said keyboard (6) and the said switch (8) being assembled on one side of the said upper face, the other side of which is used for holding the said set.

4. A telephone set according to Claim 1, characterized in that the said casing comprises two halfcasings (2, 3) assembled with the interposition of a seal (4) for tightness and protection against shocks; and in that the said seal (4) also forms an acoustic seal cooperating with a peripheral seal (48) mounted in the housing (46) for the said casing (1) provided in the said module (45), the base of the said housing comprising apertures (51, 52) for connecting the said module acoustically to the loud-speaker (28) and the microphone (32) contained in the said casing, the said apertures being arranged opposite the respective grilles (10, 12) of the said casing (1) against which grilles the loud-speaker (28) and the microphone (32) are mounted.

5. A telephone set according to Claim 1, characterized in that the said further connector (14) is formed by a multipolar male plug mounted in a module (15) containing the said circuits (41, 42, 43) which are insertable in the circuit contained in the said casing (1), the said module comprising a housing (16) having a base (17), at least one end flange (18) and a least one lateral flange (19) for guiding the casing (1), the base (17) of the said housing (16) having a convex shape complementing the shape of the lower face of the said casing (1), the multipolar male plug (14) being positioned in the projecting part of the said base so as to connect with the connector (40) of the casing (1) by introduction into the slot (13) of the casing (1) when the latter is positioned in the said housing (16).

6. A telephone set according to Claim 1, characterized in that the said casing (1) comprises in its lower face a recess (20) which surrounds the slot (13) and is intended for accommodating a module (55) of an integrated circuit which can be plugged in and contains at least one complementary electronic circuit.

7. A telephone set according to Claim 1, characterized in that it comprises a wall support having a projecting element which engages in the slot (13) in order to fix the said set in position.

8. A telephone set according to Claim 3, characterized in that the keyboard is a metallic dish-type keyboard comprising an assembly of metallic dish-type contacts substantially constituted by a rigid support member in which there are embedded the connection wires, and by a flexible sheet bearing the dishes and their connections, the assembly of metallic dish-type contacts (105) being disposed in a housing (103) formed by a cavity whose base (110) has a continuously projecting peripheral ridge (111) on which there is welded by ultrasound a support member (107) of the said assembly of contacts (105) so as to form a closed lamellar area (112) forming the sounding box between the said support member (107) and the base (110) of the housing.

9. A set according to Claim 8, characterized in that the said housing (103) comprises a shoulder (114) level with the upper face of the said assembly of contacts (105) and in that the said assembly of contacts (105) is covered with a flexible thermoformed film (106), the shape of which corresponds to that of the support sheet (109) for the dishes which is fixed on the said sheet (109) so as to be completely leakproof and the edges of which are fixed on the above-mentioned shoulder (114), the said film (106) being fixed in place by ultrasonic welding.

10. A set according to Claim 9, characterized in that the flexible thermoformed film (106) is formed by a first layer of transparent material (115), on the lower face of which there are printed touch marks (117), and by a second protective layer (116) stuck on the lower face of the first layer (115), the assembly being subsequently subjected to a thermoforming treatment so as to shape the support sheet (109) for the dish type contacts.

11. A set according to Claim 8, characterized in that the dimensions of the housing (103) are slightly greater than the external dimensions of the assembly of contacts (105) so as to allow a certain degree of play for ultrasonic welding.

12. A set according to Claim 10, characterized in that a layer of adhesive material (118) is interposed between the first layer (115) and the second layer (116) for protecting the flexible thermoformed film.

13. A set according to Claim 10, characterized in that the said first layer (115) is made from polycarbonate.

14. A set according to Claim 13, characterized in that the thickness of the said first layer (115) is approximately three times smaller than that of the second protective layer (116).

# FIG.1

# FIG.2

# FIG.3

FIG.4

# FIG.5

| 25 |
|---|

| 29 |
|---|

40   14

| 37 |
|---|

| 38 |
|---|

| 41 |
|---|

| 6 |
|---|

# FIG.6

| 25 |
|---|

| 29 |
|---|

40   14

| 30 |
|---|

| 42 |
|---|

# FIG.7

| 25 |
|---|

| 29 |
|---|

| 31 |
|---|

40   14

| 43 |
|---|

0 074 319

## FIG.8

## FIG.9

FIG.10

104
117
102
101

106
117
108
113
114
105
114
103
111
110
104

FIG.11

FIG.12

FIG.13

FIG.14

FIG.16

FIG.15